Europäisches Patentamt

European Patent Office

Office européen des brevets

(19)

(11) Numéro de publication : **0 012 976**
**B1**

(12)

# FASCICULE DE BREVET EUROPÉEN

(45) Date de publication du fascicule du brevet :
02.12.81

(21) Numéro de dépôt : **79105228.5**

(22) Date de dépôt : **17.12.79**

(51) Int. Cl.³ : **A 47 J 43/046, A 47 J 42/56**

(54) Appareil ménager à couteaux rotatifs, tel qu'un hachoir ou broyeur.

(30) Priorité : **22.12.78 FR 7836274**

(43) Date de publication de la demande :
**09.07.80 (Bulletin 80/14)**

(45) Mention de la délivrance du brevet :
**02.12.81 Bulletin 81/48**

(84) Etats contractants désignés :
**AT BE CH DE IT NL**

(56) Documents cités :
FR - A - 1 224 673
FR - A - 2 043 770
FR - A - 2 140 891
FR - A - 2 340 707
NL - A - 6 407 719

(73) Titulaire : **MOULINEX S.A.**
**7 à 15, rue Jules-Ferry**
**F-93170 Bagnolet (France) (FR)**

(72) Inventeur : **Beaugrand, Jean-Louis**
**65, rue de Romainville**
**F-75019 Paris (FR)**

(74) Mandataire : **May, Hans Ulrich**
**Thierschstrasse 27**
**D-8000 München 22 (DE)**

EP 0 012 976 B1

Imprimerie Jouve, 17, rue du Louvre, 75001 Paris, France

Appareil ménager à couteaux rotatifs, tel qu'un hachoir ou broyeur

L'invention se rapporte aux appareils ménagers, tels que hachoirs ou broyeurs, comprenant un socle dans lequel est agencé un moteur électrique dont l'arbre de sortie est situé sur la face supérieure dudit socle, un bol qui est monté de manière amovible sur ladite face supérieure du socle et dont le fond supporte un arbre rotatif portant, d'une part, des couteaux internes au bol et, d'autre part, un entraîneur adapté à s'accoupler avec l'arbre de sortie du moteur, et un couvercle monté de manière amovible sur le bol, et un interrupteur de commande du moteur qui est agencé dans le socle et dont la touche de manœuvre est située sur la face supérieure du socle à proximité du bol.

Un appareil de ce genre est décrit, par exemple, dans la demande de brevet néerlandaise NL-A-64 07 719, dans laquelle la touche de commande de l'interrupteur est manœuvrée par un doigt solidaire du fond du bol. Avec un tel dispositif, il existe un risque important de blessure puisqu'il est possible à l'usager de mettre en marche le moteur sans avoir au préalable placé le couvercle sur le bol.

Pour éviter cet inconvénient, on a déjà proposé, comme décrit dans le brevet français FR-A-2 140 891, de munir le couvercle d'une jupe qui descend autour du bol et dont le bord inférieur est situé à l'aplomb de la touche de l'interrupteur, le couvercle pouvant alors occuper par rapport au bol, soit une position haute pour laquelle il coiffe ce bol tout en laissant la touche en position de repos, soit une position basse pour laquelle le bord inférieur de la jupe du couvercle amène ladite touche en position de travail. Avec un appareil de ce genre, il peut cependant arriver, en fin d'opération de hachage ou broyage, que l'arbre du moteur et les couteaux continuent à tourner pendant quelques instants par effet d'inertie après retour de l'interrupteur à la position de repos, c'est-à-dire après rupture de l'alimentation du moteur. Si alors l'usager enlève complètement le couvercle, il peut encore se présenter pour lui un risque de blessure.

L'invention a pour but de supprimer aussi ce risque.

Un appareil selon la présente invention est aussi un type comportant un couvercle ainsi équipé d'une telle jupe qui descend autour du bol et dont le bord inférieur est adapté à manœuvrer la touche de l'interrupteur lorsque le couvercle est en position basse, et il est caractérisé en ce que la face externe de la paroi latérale du bol et la face interne de la jupe du couvercle sont munies de moyens d'assemblage mutuels qui comprennent au moins un bossage porté par l'une desdites faces et au moins un logement ménagé sur l'autre face et adapté à recevoir de manière élastique ledit bossage lorsque le couvercle passe de sa position haute à sa position basse lors d'une pression exercée sur lui par l'usager.

Grâce à cette disposition, lorsque, après l'opération de hachage ou broyage, l'usager soulève le couvercle, il soulève en même temps le bol puisque celui-ci est alors assemblé au couvercle, ce qui désaccouple les couteaux de l'arbre du moteur.

Ainsi, l'ensemble du bol et du couvercle constituent à ce moment une boîte fermée que, normalement, l'usager n'ouvre qu'après l'avoir séparée du socle contenant le moteur.

Les caractéristiques et avantages de l'invention ressortiront d'ailleurs de la description qui va suivre, à titre d'exemple, en référence aux dessins annexés dans lesquels :

la figure 1 est une coupe verticale représentant un appareil selon l'invention avec le bol posé sur le socle, le couvercle en position haute, et la touche de l'interrupteur en position de repos ;

la figure 2 est une coupe partielle du même appareil lors d'une pression exercée par l'usager sur le couvercle, c'est-à-dire avec ce couvercle en position basse, la touche de l'interrupteur en position de travail, et le couvercle assemblé au bol ;

la figure 3 est une vue analogue à la figure 2, mais après relâchement de la pression exercée par l'usager ;

la figure 4 est une vue en coupe illustrant, à grande échelle, les moyens d'assemblage mutuels du bol et du couvercle ;

la figure 5 est une vue en coupe de la boîte fermée constituée par le bol et le couvercle assemblés ;

la figure 6 est une vue de dessous de cette boîte ;

la figure 7 est une vue partielle en élévation de cette boîte en la position qu'elle occupe sur le socle à la figure 3 ;

la figure 8 est une vue de dessus du socle après enlèvement de cette boîte.

L'appareil représenté est un petit hachoir ménager destiné plus particulièrement au traitement des fines herbes, oignons ou ail. Il comprend un socle 10 dans lequel est agencé un moteur électrique 12 dont l'arbre de sortie 14 est situé sur la face supérieure 16 du socle. Un bol 18 est monté de manière amovible sur ladite face 16 du socle. Le fond 20 de ce bol supporte un arbre rotatif 22 portant, d'une part, des couteaux 24 internes au bol et, d'autre part, un entraîneur 26 adapté à s'accoupler avec l'arbre de sortie 14. Un couvercle 28 monté de manière amovible sur le bol 18 comporte une jupe 30 qui descend autour de ce bol.

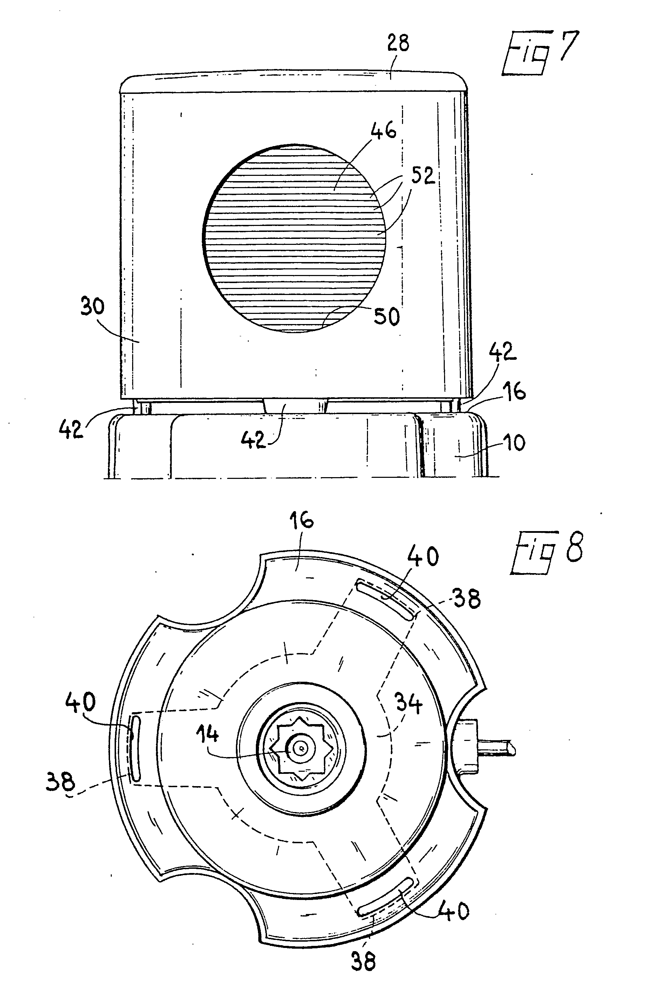

Dans le socle 10 est agencé un interrupteur 32 qui commande l'alimentation du moteur 12. Cet interrupteur est manœuvré par l'intermédiaire d'un poussoir 34 monté mobile verticalement dans le socle sous la face supérieure 16, et repoussé fortement vers le haut par un ressort 36 prenant appui sur le flasque supérieur du moteur. Ce poussoir a la forme d'une pièce annulaire qui entoure l'arbre 14 du moteur et qui présente trois prolongements 38 s'étendant respectivement sous trois lumières 40 (fig. 8) pratiquées dans la face supérieure 16 à proximité de la périphérie de l'embase du bol 18. Ces trois prolongements 38 constituent ensemble une touche de manœuvre de l'interrupteur 32.

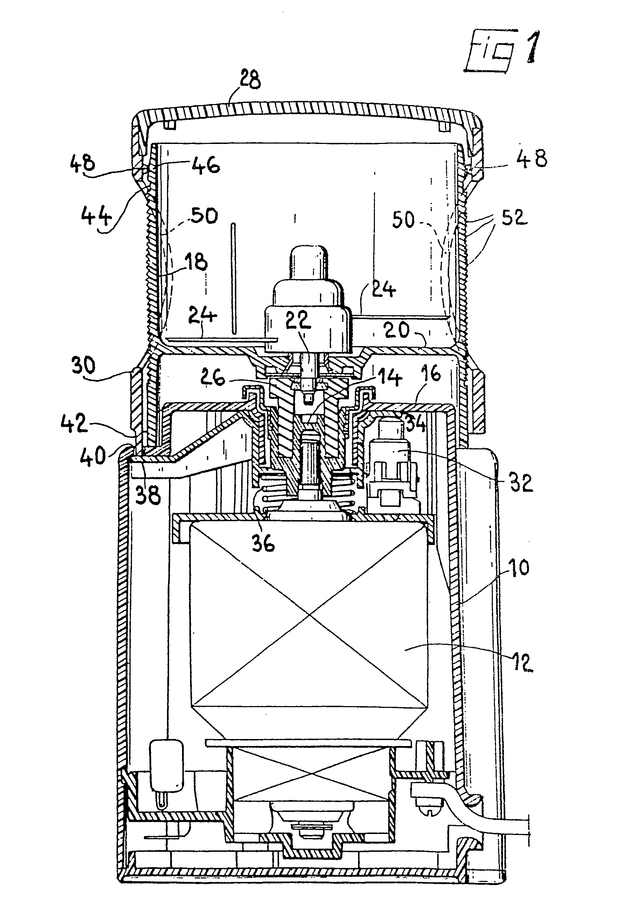

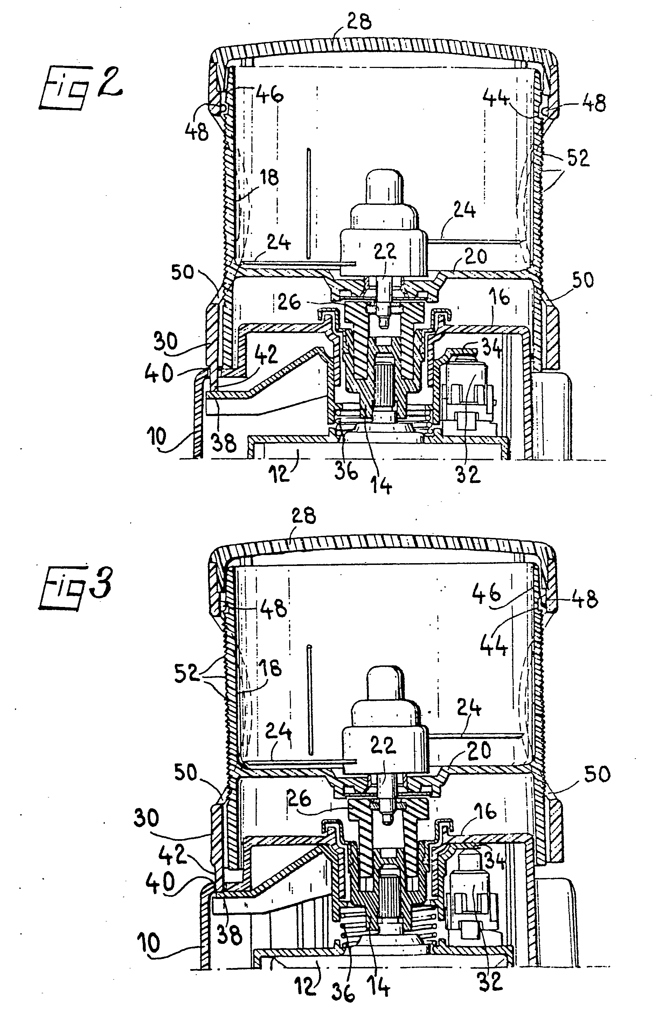

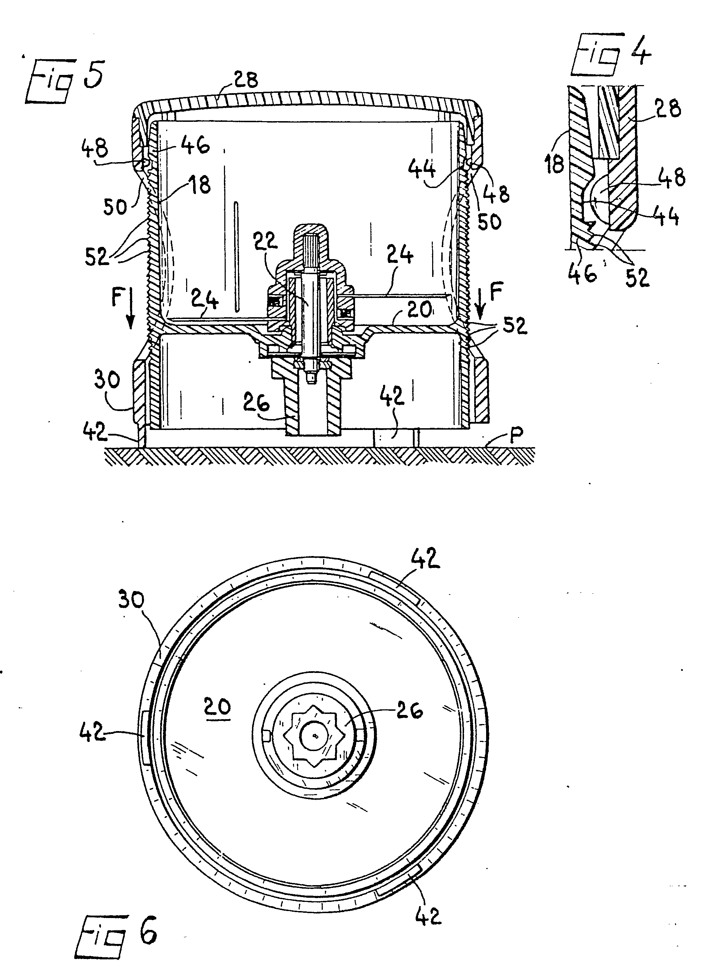

Comme on le voit notamment sur la figure 6, le bord inférieur de la jupe 30 du couvercle porte trois doigts 42 espacés sur la périphérie et situés à l'aplomb des lumières 40 de manière à pouvoir pénétrer respectivement dans ces lumières et venir ainsi au contact des prolongements 38. Ainsi, le couvercle 28 peut occuper soit une position haute (fig. 1) pour laquelle il coiffe le bol tout en laissant le poussoir 34 en position haute et l'interrupteur 32 en position de repos, soit une position basse (fig. 2) que l'usager peut obtenir en exerçant sur ce couvercle une pression suffisante et pour laquelle les doigts 42 abaissent le poussoir 34 et amènent ainsi l'interrupteur 32 en position de travail, ce qui provoque la mise en marche du moteur.

Selon la présente invention, le bol 18 et le couvercle 28 sont munis de moyens d'assemblage mutuels qui sont mis en œuvre lorsque le couvercle passe de sa position haute à sa position basse.

Comme on le voit mieux sur la figure 4, ces moyens d'assemblage comprennent une rainure périphérique 44 pratiquée dans la région supérieure de la face externe de la paroi latérale 46 du bol 18, ainsi qu'au moins deux bossages 48 ménagés sur la face interne de la jupe 30 du couvercle 28 et adaptés à s'engager dans la rainure 44 après légère déformation élastique du bord supérieur de la paroi 46 consécutivement à la pression exercée par l'usager sur le couvercle 28.

Ainsi, dès la mise en marche du moteur, le bol et le couvercle constituent ensemble une boîte bien fermée, ce qui interdit tout accès direct aux couteaux 24.

Si alors l'usager tente d'enlever le couvercle de l'appareil, il soulève en même temps le bol. Donc ce mouvement, non seulement coupe l'alimentation du moteur puisque le poussoir 34, libéré des doigts 42, remonte de lui-même sous l'action du ressort 36, mais encore désaccouple les couteaux de l'arbre 14.

Si, sans tenter d'enlever le couvercle, l'usager relâche simplement la pression sur ce couvercle, le poussoir 34 sous l'action du ressort 36 ramène en la position haute le couvercle ainsi que le bol qui lui est assemblé, c'est-à-dire la boîte fermée qu'ils constituent ensemble (fig. 3 et 7).

Après l'opération de hachage, l'usager sépare cette boîte du socle 10 avant de procéder à son ouverture. Dans le but de faciliter cette opération d'ouverture, d'une part on a pratiqué dans la jupe 30 du couvercle deux larges échancrures 50 diamétralement opposées qui laissent l'accès des doigts de la main à la paroi latérale 46 du bol, et d'autre part on a ménagé sur la face externe de cette paroi des stries 52 orientées horizontalement aptes à empêcher le glissement des doigts sur cette paroi. Une manière commode de procéder à l'ouverture consiste à poser la boîte sur un plan P tel que représenté à la figure 5, et à exercer sur le bol, par action des doigts à travers les échancrures 50, une traction vers le bas (flèches F) propre à désassembler ce bol du couvercle.

**Revendications**

1. Appareil ménager à couteaux rotatifs, tel qu'un hachoir ou broyeur, comprenant un socle (10) dans lequel est agencé un moteur électrique (12) dont l'arbre de sortie (14) est situé sur la face supérieure (16) dudit socle, un bol (18) qui est monté de manière amovible sur ladite face supérieure (16) du socle et dont le fond (20) supporte un arbre rotatif (22) portant, d'une part des couteaux (24) internes au bol et, d'autre part un entraîneur (26) adapté à s'accoupler avec l'arbre de sortie (14) du moteur, un interrupteur de commande du moteur qui est agencé dans le socle (10) et dont la touche de manœuvre (38) est située sur la face supérieure du socle à proximité dudit bol (18), et un couvercle (28) monté de manière amovible sur le bol (18) et comportant une jupe (30) qui descend autour dudit bol et dont le bord inférieur est situé à l'aplomb de ladite touche (38), ce couvercle (28) pouvant occuper par rapport au bol (18), soit une position haute pour laquelle il coiffe ce bol tout en laissant la touche (38) de l'interrupteur en position de repos, soit une position basse pour laquelle le bord inférieur de la jupe (30) du couvercle amène ladite touche (38) en position de travail, caractérisé en ce que la face externe de la paroi latérale (46) du bol (18) et la face interne de la jupe (30) du couvercle (28) sont munies de moyens d'assemblage mutuels qui comprennent au moins un bossage (48) porté par l'une desdites faces et au moins un logement (44) ménagé sur l'autre face et adapté à recevoir de manière élastique ledit bossage (48) lorsque le couvercle (28) passe de ladite position haute à ladite position basse lors d'une pression exercée sur lui par l'usager, le bol (18) et le couvercle (28) constituant alors une boîte fermée en sorte que, si l'usager soulève alors ledit couvercle (28), il soulève en même temps le bol (18), ce qui désaccouple les couteaux (24) de l'arbre (14) du moteur.

2. Appareil ménager selon la revendication 1, caractérisé en ce que, le logement (44) étant constitué par une rainure périphérique pratiquée dans la face externe de la paroi latérale (46) du bol, la face interne de la jupe (30) du couvercle porte au moins deux bossages (48) adaptés à s'engager dans ladite rainure (44) après déformation élastique de ladite paroi (46) du bol.

3. Appareil ménager selon la revendication 1 ou la revendication 2, caractérisé en ce que le bord inférieur de la jupe (30) du couvercle (28) porte des doigts (42) espacés sur la périphérie qui pénètrent dans des lumières (40) de la face supérieure (16) du socle (10), tandis que l'interrupteur (32) est commandé par l'intermédiaire d'un poussoir annulaire mobile verticalement (34) entourant l'arbre de sortie (14) du moteur (12) sous ladite face supérieure (16) et présentant des prolongements (38) qui s'étendent respectivement sous lesdites lumières (40) et constituent ainsi ensemble la touche de manœuvre de l'interrupteur, ledit poussoir (34) étant repoussé fortement vers le haut par un ressort (36) qui, lorsque cesse la pression de l'usager, est apte à ramener en la position haute le couvercle (28) ainsi que le bol (18) qui lui est assemblé.

4. Appareil ménager selon l'une quelconque des revendications 1 à 3, caractérisé en ce que la jupe (30) du couvercle (28) présente au moins deux larges échancrures (50) qui laissent l'accès des doigts de la main à la paroi latérale (46) du bol (18) dans le but de désassembler le couvercle du bol.

5. Appareil ménager selon la revendication 4, caractérisé en ce que la face externe de la paroi latérale (46) du bol présente des stries (52) orientées horizontalement aptes à empêcher le glissement des doigts de la main sur cette paroi.

## Claims

1. A household mixing and chopping apparatus with rotating cutting blades, such as a mincing machine or a grinder, comprising a base (10) including an electric motor (12) the output shaft (14) of which is positioned at the top (16) of the base, a bowl (18) which is releasably retained on the top (16) of the base and the bottom (20) of which accommodates a rotary shaft (22) one end of which carries rotating cutting blades (24) disposed in the bowl and the other end of which carries a driver (26) adapted to be coupled to the output shaft (14) of the motor, and comprising a switch disposed within the base (10) for controlling the motor, the actuating key (38) of said switch being disposed at the top of the base in the proximity of the bowl (18), and comprising a lid (28) removably mounted on the bowl (18) and having a skirt (30) extending downwardly around the bowl, the lower edge of said skirt being disposed perpendicularly above the actuating key (38), wherein said lid (28) may either have an upper position relative to the bowl (18) in which it covers the latter while it leaves the actuating key (38) of the switch in the inoperative position, or a lower position relative to the bowl in which the lower edge of the skirt (30) of the lid moves the key (38) into the operative position, characterized in that the outer surface of the sidewall (46) of the bowl (18) and the inner surface of the skirt (30) of the lid (28) are provided with means for mutual engagement therebetween, said means comprising at least one projection (48) carried on one of said surfaces and at least one seat (44) formed on the other surface and capable of resiliently receiving the projection (48) when the lid (28) is brought from the upper position into the lower position due to pressure applied thereto by the user, wherein the bowl (18) and the lid (28) will then form a closed vessel such that, if the user lifts the lid (28), he will at the same time lift the bowl (18), thereby decoupling the rotary cutting blades (24) from the shaft (14) of the motor.

2. An apparatus according to claim 1, characterized in that the seat (44) is constituted by a circumferential groove formed in the outer surface of the sidewall (46) of the bowl, and that the inner side of the skirt (30) of the lid carriers at least two projections (48) which after resilient deformation of the wall (46) of the bowl may latch within the groove (44).

3. An apparatus according to claim 1 or claim 2, characterized in that the lower edge of the skirt (30) of the lid (28) is provided with circumferentially spaced fingers (42) which penetrate into elongated slots (40) in the upper side (16) of the base (10) while the switch (32) is actuated by means of an annular, vertically movable pusher member (34) which surrounds the output shaft (14) of the motor (12) beneath the top (16) and is formed with extensions (38) respectively extending to beneath the slots (40) and thus jointly forming the actuating key of the switch, wherein the pusher member (34) is strongly urged upwardly by a spring (36) which, when the user ceases to apply pressure, may bring the lid (28) and the bowl (18) joined thereto into the upper position.

4. An apparatus according to any of the claims 1 to 3, characterized in that the skirt (30) of the lid (28) includes at least two wide throughopenings (50) which permit access of the fingers of a hand to the sidewall (46) of the bowl (18) in order to remove the lid from the bowl.

5. An apparatus according to claim 4, characterized in that the outer surface of the sidewall (46) of the bowl is formed with horizontally extending grooves (52) to prevent sliding of the fingers of a hand along saif wall.

## Ansprüche

1. Haushalts-Mischzerkleinerer mit rotierenden Schlagmessern, wie ein Hackgerät oder eine Mühle, mit einem Sockel (10), in dem ein Elektromotor (12) angeordnet ist, dessen Abtriebswelle (14) sich an der Oberseite (16) des Sockels befindet, einer Arbeitsschüssel (18), die abnehmbar auf der Oberseite (16) des Sockels gehalten ist und deren Boden (20) eine drehbare Welle (22) hält, die einerseits in der Arbeitsschüssel angeordnete Schlagmesser (24) und andererseits einen Mitnehmer (26) trägt, der mit der Abtriebswelle (14) des Motors kuppelbar ist, einem im Sockel (10) angeordneten Schalter zur Steuerung des Motors, dessen Betätigungstaste (38) an der Oberseite des Sockels in der Nähe der Arbeitsschüssel (18) angeordnet ist, und mit einem Deckel (28), der abnehmbar auf der Arbeitsschüssel (18) angebracht ist und eine Schürze (30) aufweist, die sich um die Arbeitsschüssel nach unten erstreckt und deren Unterkante senkrecht über der Betätigungstaste (38) angeordnet ist, wobei dieser Deckel (28) bezüglich der Arbeitsschüssel (18) entweder eine obere Stellung, in der er diese Arbeitsschüssel überdeckt, jedoch dabei die Betätigungstaste (38) des Schalters in Ruhestellung läßt, oder eine untere Stellung einnehmen kann, in der die Unterkante der Schürze (30) des Deckels die Taste (38) in Arbeitsstellung bringt, dadurch gekennzeichnet, daß die Außenfläche der Seitenwand (46) der Arbeitsschüssel (18) und die Innenfläche der Schürze (30) des Deckels (28) mit Vorrichtungen zur gegenseitigen Verbindung versehen sind, welche mindestens einen von einer der Flächen getragenen Vorsprung (48) und mindestens einen Sitz (44) aufweisen, der an der anderen Fläche ausgebildet und zur elastischen Aufnahme des Vorsprungs (48) bestimmt ist, wenn der Deckel (28) von der oberen Stellung in die untere Stellung gelangt, wenn der Benutzer einen Druck auf ihn ausübt, wobei die Arbeitsschüssel (18) und der Deckel (28) dann ein geschlossenes Gefäß bilden derart, daß, wenn der Benutzer nun den Deckel (28) anhebt, er gleichzeitig die Arbeitsschüssel (18) anhebt, was die Schlagmesser (24) von der Welle (14) des Motors abkuppelt.

2. Haushalts-Mischzerkleinerer nach Anspruch 1, dadurch gekennzeichnet, daß der Sitz (44) aus einer in der Außenfläche der Seitenwand (46) der Arbeitsschüssel ausgebildeten Umfangsnut besteht und daß die Innenseite der Schürze (30) des Deckels mindestens zwei Vorsprünge (48) trägt, die nach elastischer Verformung der Wand (46) der Arbeitsschüssel in die Nut (44) einrasten können.

3. Haushalts-Mischzerkleinerer nach Anspruch 1 oder 2, dadurch gekennzeichnet, daß die Unterkante der Schürze (30) des Deckels (28) in Abständen über den Umfang verteilt Finger (42) trägt, die in langlöcher (40) der Oberseite (16) des Sockels (10) eindringen, während der Schalter (32) mittels eines ringförmigen senkrecht beweglichen Drückers (34) betätigt wird, der die Abtriebswelle (14) des Motors (12) unter der Oberseite (16) umgibt and Verlängerungen (38) aufweist, die sich jeweils unter die Langlöcher (40) erstrecken und so insgesamt die Betätigungstaste des Schalters bilden, wobei der Drücker (34) durch eine Feder (36) stark nach oben beaufschlagt ist, die, wenn der Benutzer keinen Druck mehr ausübt, den Deckel (28) sowie die mit ihm vereinigte Arbeitsschüssel (18) in die obere Stellung bringen kann.

4. Haushalts-Mischzerkleinerer nach einem der Ansprüche 1 bis 3, dadurch gekennzeichnet, daß die Schürze (30) des Deckels (28) mindestens zwei große Ausschnitte (50) aufweist, welche den Zugang der Finger der Hand zur Seitenwand (46) der Arbeitsschüssel (18) ermöglichen, um den Deckel von der Arbeitsschüssel abzunehmen.

5. Haushalts-Mischzerkleinerer nach Anspruch 4, dadurch gekennzeichnet, daß die Außenfläche der Seitenwand (46) der Arbeitsschüssel waagrecht verlaufende (52) Rillen aufweist, welche das Gleiten der Finger der Hand auf dieser Wand verhindern.

Fig 1

Fig 2

Fig 3

Fig 5

Fig 4

Fig 6

Fig 7

Fig 8